# EUROPÄISCHE PATENTSCHRIFT

(11) **EP 1 091 112 B1**
(45) Veröffentlichungstag und Bekanntmachung des Hinweises auf die Patenterteilung: **21.04.2004**
(21) Anmeldenummer: 00116817.8
(22) Anmeldetag: 04.08.2000
(51) Int. Cl.: F02M 25/07, F16K 31/52

(54) **Ventileinheit, Brennluftansaugkanalabschnitt sowie Abgasrückführeinheit für Brennkraftmaschinen**
Valve, intake air conduit and exhaust gas recirculation unit for combustion engines
Soupape, conduit d'admission d'air et unité de recirculation de gaz d'échappement pour moteurs à combustion

(30) Priorität: 05.10.1999 DE 19947971; 21.01.2000 DE 10002577
(43) Veröffentlichungstag der Anmeldung: 11.04.2001
(73) Patentinhaber: Pierburg GmbH, 41460 Neuss (DE)
(72) Erfinder: Dismon, Heinrich, 52538 Gangelt (DE); Köster, Andreas, 45149 Essen (DE)
(74) Vertreter: Ter Smitten, Hans

(56) Entgegenhaltungen:
- DE-A- 3 606 722
- DE-C- 19 725 668
- US-A- 4 840 350
- US-A- 5 494 255
- US-A- 5 704 585

## Beschreibung

Die Erfindung betrifft ein Abgasrückführventil gemäß dem Oberbegriff des Anspruchs 1, sowie eine Abgasrückführeinheit gemäß dem Oberbegriff des Anspruchs.

Ein derartiges Abgasrückführventil beim Einsatz in einer Abgasrückführeinheit ist beispielsweise aus der EP-A2-900.930 bekannt. Das Abgasrückführventil weist dabei eine Antriebseinheit, eine Getriebeeinheit, eine Ventilstange und zumindest einen Ventilteller auf, wobei die Getriebeeinheit ein exzentrisch angeordnetes Kupplungsteil aufweist, das mit der Ventilstange in Wirkverbindung steht. Durch eine derartige exzentrische Anordnung des Kupplungsteils können auf einfache Weise rotatorische Bewegungen des Motors und des damit verbundenen Getriebes in lineare Bewegungen der Ventilstange mit einer hohen Stellkraft umgesetzt werden. Dadurch, daß die Ventilstange im vorliegenden Fall jedoch am Kupplungsteil fixiert ist, müssen relativ hohe Reibungskräfte überwunden werden, wobei sich durch die Schwenkbewegung der Ventilstange eine Positionierung des Ventilkörpers schwer durchführen läßt.

Hiervon ausgehend liegt der Erfindung die Aufgabe zugrunde, ein gattungsgemäßes Abgasrückführventil für Brennkraftmaschinen zu schaffen, das die oben genannten Nachteile vermeidet und zudem einfach aufgebaut und kostengünstig herzustellen ist.

Diese Aufgabe wird dadurch gelöst, daß das Kupplungsteil ein Lagerelement ist, das mittels Kraftschluß auf die Ventilstange einwirkt, wobei das Lagerelement direkt mit seinem Umfang mit der Ventilstange (6) in Kontakt steht.

Auf diese Weise ist gewährleistet, daß trotz der Exzentrizität des Kupplungsteiles eine gerade, lineare Bewegung der Ventilstange realisiert wird. Außerdem sind Reibungsverluste auf ein Minimum beschränkt. Dadurch, daß das Lagerelement ein Wälzlager ist, kann eine besonders einfache und robuste Ausführungsform des Abgasrückführventils realisiert werden. Die Getriebeeinheit kann dabei ein Führungsorgan aufweisen, das jeweils ein auf das Wälzlager in Vertikal- und Horizontalrichtung wirkendes Nockenelement besitzt und an der Ventilstange fixiert ist, wodurch die Ventilstange und damit auch der Ventilteller aufgrund des horizontalen Nockenelmentes bei einer Drehrichtungsumkehr der Antriebseinheit auch in Schließrichtung bewegt werden kann. Das vertikale Nockenelement dient dabei als Endanschlag des Wälzlagers, sollte er den maximalen Hub (bzw. Drehwinkel) überschreiten. Damit lassen sich motorisch unterstützte Schließ- bzw. Haltekräfte realisieren, die z.B. bei Anwendung als Abgasrückführventileinheit ein ungewolltes Öffnen des Ventils verhindern können. Außerdem kann bei kritischen Betriebszuständen wie z.B. einem Verklemmen oder Verkleben des Ventiltellers entgegengewirkt werden. Zur automatischen Rückstellung des Ventiltellers in Schließstellung kann ein Federelement vorgesehen sein, das die Ventilstange in Richtung des Wälzlagers unter Vorspannung hält.

Als besonders vorteilhaft für einen kompakten Aufbau des Abgasrückführventils hat sich als Getriebeeinheit ein Planeten- oder Planetenstandgetriebe erwiesen. Insbesondere durch das Planetenstandgetriebe läßt sich eine kurze Baulänge der Getriebeeinheit realisieren, wobei sich gleichzeitig reduzierte Trägheiten sowie eine geringe Reibung günstig auf den Getriebewirkungsgrad auswirken.

Ein einfach zu montierendes Abgasrückführventil wird dadurch geschaffen, daß ein Deckelelement vorgesehen ist, das einen Anschlußstecker zur elektrischen Kontaktierung aufweist und Steckkontaktelemente besitzt, die beim Montieren des Deckelelementes in entsprechende Steckkontaktelemente der Antriebseinheit eingreifen, derart, daß eine elektrische Verbindung zur Antriebseinheit hergestellt ist. In einer besonders vorteilhaften Ausführungsform ist eine Sensoreinheit zur Erfassung der Verstellung des Ventilhubs vorgesehen, wobei die Sensoreinheit elektrisch mit dem Anschlußstecker verbindbar ist. Die Sensoreinheit kann dabei aus einem diametralen Magnetring und einem Hallsensor bestehen. Dabei kann ein Getriebehohlrad des Planeten- oder Planetenstandgetriebes im Magnetring angeordnet sein. Auch kann eine On-board-Elektronik zur Systemsteuerung vorgesehen sein.

Besonders vorteilhaft in montagetechnischer Hinsicht ist es, wenn die Antriebseinheit und die Getriebeeinheit in einem Tunnelgehäuse angeordnet sind.

Desweiteren wird eine Abgasrückführeinheit mit einem Abgasrückführventil beansprucht, bei dem die Ventilstange in einer Ventilführungsbuchse geführt ist, die einerseits in den Ventilkanalabschnitt und andererseits in eine Ventilfederkammer hineinragt. Dabei ist es vorteilhaft, daß die Ventilstange auf dem Abschnitt, der in die Ventilfederkammer hineinragt, das Führungsorgan lagert, das gegen das Federelement anliegt, das andererseits an der Ventilfederkammerwandung abgestützt ist. Die Ventilfederkammer kann dabei von dem Getriebe-Antriebs-Gehäuse nach außen hin abgeschlossen sein. Dabei kann die Ventilführungsbuchse eine Schmutzkammer aufweisen, die beispielsweise durch eine Bohrung im Gehäuse ausgebildet ist. Um eine vorteilhafte Kennlinie bei der Abgasrückführung zu erreichen, kann der Ventilteller einen stromab des Ventilsitzes angeformten Zylinderabschnitt aufweisen. Um eine kleinere Ventiltellergröße, die wiederum geringere Stellkräfte bedingt, verwenden zu können, kann der Ventilteller einen Konusabschnitt aufweisen, der mit einem Kegelabschnitt des Ventilsitzes zusammenwirkt und stromab der Berührungslinie einen Diffusorabschnitt bildet. Stromauf des Ausmündeabschnittes in den Ansaugkanalabschnitt kann eine Drosselklappe angeordnet sein. Um eine möglichst platzsparende Ausführung zu ermöglichen, kann der Brennluftansaugkanalabschnitt mit dem Getriebe-Antriebs-Gehäuse verbunden sein.

Ausführungsbeispiele der Erfindung sind in der Zeichnung dargestellt und werden nachfolgend beschrieben. Hierbei zeigt
Figur 1 eine perspektivische Ansicht des erfindungsgemäßen Abgasrückführventils ohne Deckel,
Figur 2 eine Seitenansicht im Schnitt des erfindungsgemäßen Abgasrückführventils,
Figur 3 eine Schnittansicht der Antriebseinheit mit Deckelelement, und
Figur 4 eine Schnittansicht der erfindungsgemäßen Abgasrückführeinheit.

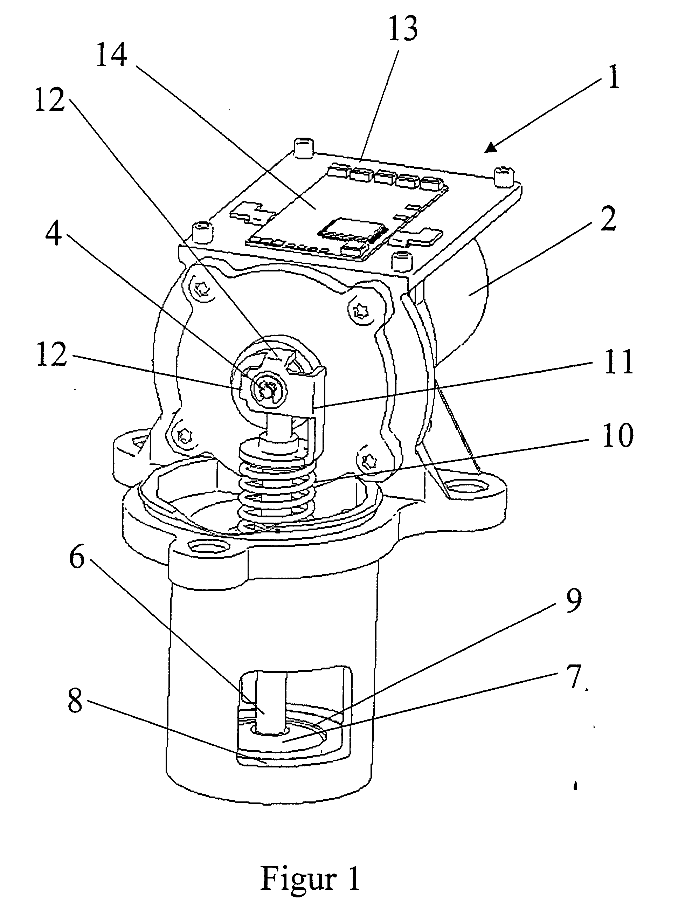

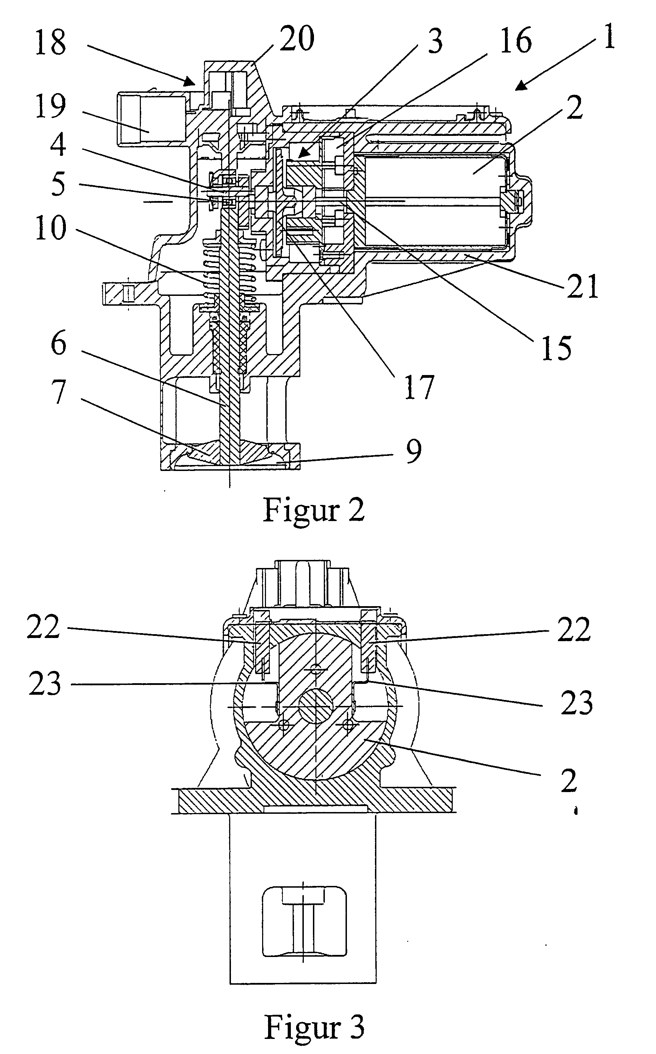

Figur 1 zeigt in einer perspektivischen Ansicht das erfindungsgemäße Abgasrückführventil 1. Das Abgasrückführventil 1 weist im wesentlichen eine Antriebseinheit 2, eine in der Figur 2 dargestellte Getriebeeinheit 3 mit einem über einen Zapfen 4 exzentrisch angeordneten Lager 5 als Kupplungsteil, das mit einer Ventilstange 6 in Wirkverbindung steht und dadurch den Ventilteller 7 in eine AufStellung bewegt. Desweiteren weist das Abgasrückführventil 1 eine Auslaßöffnung 8 und eine als Ventilsitz ausgeführte Einlaßöffnung 9 auf.

Zur stromlosen Rückstellung des Ventiltellers ist ein Federelement 10 vorgesehen, das die Ventilstange 6 in Richtung des Lagers 5 unter Vorspannung hält und auf ein fest an der Ventilstange 6 fixiertes Führungsorgan 11 angreift. Das Führungsorgan 11 dient dazu, daß die Ventilstange 6 bei Drehrichtungsumkehr der Antriebseinheit auch in Schließrichtung bewegt werden kann. Auf diese Weise kann der Ventilteller 7 aus einer verklemmten oder verklebten Stellung gelöst werden. Hierzu weist das Führungsorgan 11 jeweils ein auf das Lager in Vertikal- und Horizontalrichtung wirkendes Nockenelement 12 auf. Für die Unterbringung einer optionalen On-board-Elektronik kann ein Gehäusetableau 13 vorgesehen sein, das im vorliegenden Fall oberhalb der Antriebseinheit 2 angeordnet ist.

Figur 2 zeigt eine Seitenansicht des erfindungsgemäßen Abgasrückführventils 1 im Schnitt. Insbesondere die Getriebeeinheit 3 mit dem exzentrisch über einen Lagerzapfen 4 angeordneten Lager 5 ist deutlich zu erkennen. Die Getriebeeinheit 3 ist ein Planetenstandgetriebe, bei dem durch eine Eingangswelle 15, die mit dem Antriebsmotor 2 verbunden ist, drei nicht umlaufende Planetenräder 16 angetrieben werden, die wiederum ein Getriebehohlrad 17 antreiben, an dessen von dem Antriebsmotor 2 abgewandten Seite der Lagerzapfen 4 mit dem Lager 5 angeordnet ist.

Eine besonders kompakte Bauform ergibt sich dann, wenn das Getriebehohlrad 17 in einem mitlaufenden diametralen Magnetring angeordnet ist, der auf bekannte Weise mit einem Hallsensor zusammenwirkt, so daß der Ventilhub auf einfache Weise aus der Drehbewegung des Getriebehohlrades abgeleitet werden kann.

Weiterhin ist ein Deckel 18 dargestellt, der alternativ zu dem oben genannten Hallsensor eine Sensoreinheit 19 aufweisen kann, die auf bekannte Weise die lineare Verstellung des Ventilhubes aufnimmt. Auch ist ein Anschlußstecker 20 vorgesehen, der der elektrischen Kontaktierung dient. Dieser Anschlußstecker 20 kann wiederum mit der Sensoreinheit 19 und über in Figur 3 dargestellte Steckkontaktelemente mit der Antriebseinheit 2 verbunden sein, so daß die elektrische Ansteuerung des Abgasrückführventils 1 gewährleistet ist.

Zur einfachen Montage ist ein Gehäuse 21 des Abgasrückführventils 1 im Bereich des Antriebsmotors 2 als Tunnelgehäuse ausgeführt.

Figur 3 zeigt eine Schnittansicht der Antriebseinheit 2 mit Deckel 18. Wie bereits oben besprochen, weist der Deckel 18 Steckkontaktelemente 22 auf, die mit Deckkontaktelementen 23 der Antriebseinheit 2 zusammenwirken. Auf diese Art und Weise kann durch das Montieren des Deckels 18 auf einfache Weise eine elektrische Kontaktierung hergestellt werden.

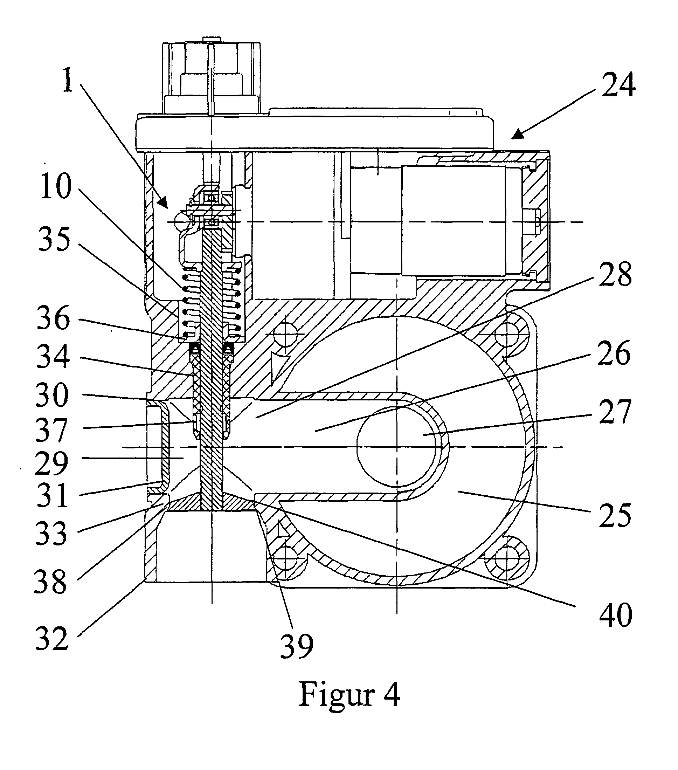

Figur 4 zeigt eine Schnittansicht einer erfindungsgemäßen Abgasrückführeinheit 24. Diese Abgasrückführeinheit weist einen Brennluftansaugkanalabschnitt 25 auf mit einem Abgaseinleitabschnitt 26 und dem Abgasrückführventil 1.

Der Abgaseinleitabschnitt 26 weist einen koaxial zum Brennluftansaugkanalabschnitt 25 angeordneten Ausmündeabschnitt 27 auf, der über einen quer zum Ausmündeabschnitt 27 angeordneten Verbindungskanal 28 mit einem Ventilkanalabschnitt 29 verbunden ist, der von dem Verbindungskanal 28 geschnitten wird. Der Verbindungskanal 28 weist einen nach außen ragenden Kanalansatz 30 auf, der durch einen Butzeneinsatz 31 verschlossen ist. Diese Ausführung läßt eine raumsparende Anordnung sowie eine einstückige Herstellung zu.

Es ist dabei vorteilhaft, wenn der Ventilkanalabschnitt 29 einen Anschlußstutzen 32 für eine nicht dargestellte Abgasrückführleitung bildet, wobei der Anschlußstutzen 32 einen Ventilsitz 33 aufweist, der mit dem Ventilteller 7 zusammenwirkt, der auf der koaxial zum Ventilkanalabschnitt 29 angeordneten Ventilstange 6 befestigt ist.

Hierbei ist weiterhin vorgesehen, daß die Ventilstange 6 in einer Ventilführungsbuchse 34 geführt ist, die einerseits in den Ventilkanalabschnitt 29 und andererseits in eine Ventilfederkammer 35 hineinragt, wobei die Ventilstange 6 auf dem Abschnitt, der in die Ventilfederkammer 35 hineinragt, das Führungsorgan 11 aufweist, auf das Federelement 10 angreift, die andererseits an der Ventilfederkammerwandung 36 abgestützt ist.

In einer besonders platzsparenden Ausführung ist die Ventilfederkammer 35 vom Gehäuse 21 nach außen hin abgeschlossen, wobei das Gehäuse 21 gleichzeitig das Getriebe-Antriebs-Gehäuse bildet und wobei die Ventilfederkammer 35 durch eine nicht dargestellte Entlüftungsbohrung mit der Atmosphäre verbunden sein kann.

Vorteilhafterweise ist vorgesehen, daß die Ventilführungsbuchse 36 eine Schmutzkammer 37 aufweist. Dadurch, daß der Ventilteller 7 einen stromab des Ventilsitzes 33 angeformten, hier jedoch nicht dargestellten Zylinderabschnitt aufweisen kann, läßt sich eine vorteilhafte Kennlinie der Abgasrückführung erreichen und dadurch, daß der Ventilteller 7 einen Konusabschnitt 38 aufweist, der mit einem Kegelabschnitt 39 des Ventilsitzes 33 zusammenwirkt und stromab der Berührungslinie einen Diffusorabschnitt 40 bildet, läßt sich eine, geringe Stellkräfte benötigende kleinere Ventiltellergröße verwenden, da im Diffusor eine Förderdruckrückgewinnung erreicht wird.

## Patentansprüche

1. Abgasrückführventil für Brennkraftmaschinen mit einer Antriebseinheit, einer Getriebeeinheit, einer Ventilstange und zumindest einem Ventilteller, wobei die Getriebeeinheit ein exzentrisch angeordnetes Kupplungsteil aufweist, das mit der Ventilstange in Wirkverbindung steht,
**dadurch gekennzeichnet, daß**
das Kupplungsteil (5) ein Lagerelement ist, das mittels Kraftschluss auf die Ventilstange (6) einwirkt, wobei das Lagerelement direkt mit seinem Umfang mit der Ventilstange (6) in Kontakt steht.

2. Abgasrückführventil nach Anspruch 1, **dadurch gekennzeichnet, daß** das Lagerelement ein Wälzlager (5) ist.

3. Abgasrückführventil nach Anspruch 2, **dadurch gekennzeichnet, daß** die Getriebeeinheit ein Führungsorgan (11) aufweist, das jeweils ein auf das Wälzlager (5) in Vertikal- und Horizontalrichtung wirkendes Nockenelement (12) besitzt und an der Ventilstange (6) fixiert ist.

4. Abgasrückführventil nach Anspruch 2 oder 3, **dadurch gekennzeichnet, daß** ein Federelement (10) vorgesehen ist, das die Ventilstange (6) in Richtung des Wälzlagers (5) unter Vorspannung hält.

5. Abgasrückführventil nach einem der vorhergehenden Ansprüche, **dadurch gekennzeichnet, daß** die Getriebeeinheit (3) ein Planeten- oder Planetenstandgetriebe ist.

6. Abgasrückführventil nach einem der vorhergehenden Ansprüche, **dadurch gekennzeichnet, daß** ein Deckelelement (18) vorgesehen ist, das einen Anschlußstecker (20) zur elektrischen Kontaktierung aufweist und Steckkontaktelemente (22) besitzt, die beim Montieren des Deckelementes in entsprechende Steckkontaktelemente (23) der Antriebseinheit (2) eingreifen, derart, daß eine elektrische Verbindung zur Antriebseinheit (2) hergestellt ist.

7. Abgasrückführventil nach einem der vorhergehenden Ansprüche, **dadurch gekennzeichnet, daß** eine Sensoreinheit (19) zur Erfassung der Verstellung des Ventilhubes vorgesehen ist, wobei die Sensoreinheit (19) elektrisch mit dem Anschlußstecker (20) verbunden ist.

8. Abgasrückführventil nach Anspruch 7, **dadurch gekennzeichnet, daß** die Sensoreinheit aus einem diametralen Magnetring und einem Hall-Sensor besteht.

9. Abgasrückführventil nach Anspruch 8, **dadurch gekennzeichnet, daß** ein Getriebehohlrad des Planeten- oder Planetenstandgetriebes im Magnetring angeordnet ist.

10. Abgasrückführventil nach einem der vorhergehenden Ansprüche, **dadurch gekennzeichnet, daß** eine On-board-Elektronik zur Systemregelung vorgesehen ist.

11. Abgasrückführventil nach einem der vorhergehenden Ansprüche, **dadurch gekennzeichnet, daß** die Antriebseinheit (2) und die Getriebeeinheit (3) in einem Tunnelgehäuse angeordnet sind.

12. Abgasrückführeinheit mit einem Abgasrückführventil nach einem der vorhergehenden Ansprüche, **dadurch gekennzeichnet, daß** die Ventilstange (6) in einer Ventilführungsbuchse (34) geführt ist, die einerseits in einen Ventilkanalabschnitt (29) und andererseits in eine Ventilfederkammer (35) hineinragt.

13. Abgasrückführeinheit nach Anspruch 12, **dadurch gekennzeichnet, daß** die Ventilstange (6) auf dem Abschnitt, der in die Ventilfederkammer (35) hineinragt, das Führungsorgan (11) lagert, das gegen das Federelement (10) anliegt, das andererseits an der Ventilfederkammerwandung (36) abgestützt ist.

14. Abgasrückführeinheit nach Anspruch 13, **dadurch gekennzeichnet, daß** die Ventilfederkammer (35) von dem Getriebe-Antriebs-Gehäuse (21) nach außen hin abgeschlossen ist.

15. Abgasrückführeinheit nach Anspruch 14, **dadurch gekennzeichnet, daß** die Ventilführungsbuchse (34) eine Schmutzkammer (37) aufweist.

16. Abgasrückführeinheit nach Anspruch 15, **dadurch gekennzeichnet, daß** der Ventilteller einen stromab des Ventilsitzes angeformten Zylinderabschnitt aufweist.

17. Abgasrückführeinheit nach einem der Ansprüche 12 - 16, **dadurch gekennzeichnet, daß** der Ventilteller (7) einen Konusabschnitt (38) aufweist, der mit einem Kegelabschnitt (39) des Ventilsitzes (33) zusammenwirkt und stromab der Berührungslinie einen Diffusorabschnitt (40) bildet.

18. Abgasrückführeinheit nach einem der Ansprüche 12 - 17, **dadurch gekennzeichnet, daß** stromauf eines Ausmündeabschnitts (27) in einen Brennluftansaugkanalabschnitt (25) eine Drosselklappe angeordnet ist.

19. Abgasrückführeinheit nach einem der Ansprüche 12 - 18, **dadurch gekennzeichnet, daß** der Brennluftansaugkanalabschnitt (25) mit dem Getriebe-Antriebs-Gehäuse (21) verbunden ist.

## Claims

1. Exhaust gas recirculation valve for internal combustion engines with a drive unit, a gear unit, a valve stem and at least one valve disc, wherein the gear unit comprises an eccentrically disposed coupling part which is connected in working terms to the valve stem,
**characterised in that**
the coupling part (5) is a bearing element which acts by means of frictional connection on the valve stem (6),
wherein the bearing element is in direct contact with the valve stem (6) by way of its circumference.

2. Exhaust gas recirculation valve according to Claim 1, **characterised in that** the bearing element is a rolling contact bearing (5).

3. Exhaust gas recirculation valve according to Claim 2, **characterised in that** the gear unit comprises a guide member (11) having a protuberance (12) which acts on the rolling contact bearing (5) in the vertical and the horizontal direction, respectively, and being fixed to the valve stem (6).

4. Exhaust gas recirculation valve according to Claim 2 or 3, **characterised in that** a spring element (10) which holds the valve stem (6) in a biased state in the direction of the rolling contact bearing (5) is provided.

5. Exhaust gas recirculation valve according to any one of the preceding Claims, **characterised in that** the gear unit (3) is a planetary gear or stationary planetary gear.

6. Exhaust gas recirculation valve according to any one of the preceding Claims, **characterised in that** a cover element (18) is provided, which element comprises an attachment plug (20) for electrical contacting and has plug-in contact elements (22) which, upon mounting the cover element, engage in corresponding plug-in contact elements (23) of the drive unit (2) so as to establish an electrical connection to the drive unit (2).

7. Exhaust gas recirculation valve according to any one of the preceding Claims, **characterised in that** a sensor unit (19) is provided to detect the travel of the valve stroke, wherein the sensor unit (19) is electrically connected to the attachment plug (20).

8. Exhaust gas recirculation valve according to Claim 7, **characterised in that** the sensor unit consists of a diametrical magnetic ring and a Hall sensor.

9. Exhaust gas recirculation valve according to Claim 8, **characterised in that** an internal gear of the planetary or stationary planetary gear is disposed in the magnetic ring.

10. Exhaust gas recirculation valve according to any one of the preceding Claims, **characterised in that** on-board electronics equipment is provided for system control.

11. Exhaust gas recirculation valve according to any one of the preceding Claims, **characterised in that** the drive unit (2) and the gear unit (3) are disposed in a tunnel box.

12. Exhaust gas recirculation unit with an exhaust gas recirculation valve according to any one of the preceding Claims, **characterised in that** the valve stem (6) is guided in a valve stem bush (34) which projects on one side into a valve port portion (29) and on the other into a valve spring chamber (35).

13. Exhaust gas recirculation unit according to Claim 12, **characterised in that** the valve stem (6) carries the guide member (11) on the portion which projects into the valve spring chamber (35), this member lying against the spring element (10), which is supported on the other side at the valve spring chamber wall (36).

14. Exhaust gas recirculation unit according to Claim 13, **characterised in that** the valve spring chamber (35) is sealed off from the gear-drive box (21) towards the outside.

15. Exhaust gas recirculation unit according to Claim 14, **characterised in that** the valve stem bush (34) comprises a dirt chamber (37).

16. Exhaust gas recirculation unit according to Claim 15, **characterised in that** the valve disc comprises a cylinder portion which is moulded on downstream of the valve seat.

17. Exhaust gas recirculation unit according to any one of Claims 12 - 16, **characterised in that** the valve disc (7) comprises a cone portion (38) which co-operates with a conical portion (39) of the valve seat (33) and forms a diffusor portion (40) downstream of the line of contact.

18. Exhaust gas recirculation unit according to any one of Claims 12 - 17, **characterised in that** a throttle valve is disposed upstream of a discharge portion (25) into a combustion air intake port portion (25).

19. Exhaust gas recirculation unit according to any one of Claims 12 - 18, **characterised in that** the combustion air intake port portion (25) is connected to the gear-drive box (21).

## Revendications

1. Soupape de recyclage des gaz d'échappement pour moteurs thermiques comportant une unité d'entraînement, une unité de transmission, une tige de soupape et au moins une tête de soupape, l'unité de transmission présentant une pièce d'accouplement disposée de manière excentrée qui est en liaison active avec la tige de soupape,
**caractérisée en ce que**
la pièce d'accouplement (5) est un élément de palier qui agit sur la tige de soupape (6) par adhérence, l'élément de palier étant directement en contact par sa périphérie avec la tige de soupape (6).

2. Soupape de recyclage des gaz d'échappement selon la revendication 1, **caractérisée en ce que** l'élément de palier est un palier à roulement (5).

3. Soupape de recyclage des gaz d'échappement selon la revendication 2, **caractérisée en ce que** l'unité de transmission présente un organe de guidage (11) qui possède un élément de came (12) agissant sur le palier à roulement (5) dans chacune des directions verticale et horizontale et est fixé sur la tige de soupape (6).

4. Soupape de recyclage des gaz d'échappement selon la revendication 2 ou 3, **caractérisée en ce qu'**un élément de ressort (10) est prévu qui maintient la tige de soupape (6) en précontrainte en direction du palier à roulement (5).

5. Soupape de recyclage des gaz d'échappement selon l'une des revendications précédentes, **caractérisée en ce que** l'unité de transmission (3) est un engrenage planétaire ou engrenage stationnaire planétaire.

6. Soupape de recyclage des gaz d'échappement selon l'une des revendications précédentes, **caractérisée en ce qu'**un élément de couvercle (18) est prévu qui présente un connecteur de raccordement (20) pour le contact électrique et possède des éléments de contact enfichables (22) qui, lors du montage de l'élément de couvercle, viennent en prise dans des éléments de contact enfichables (23) correspondants de l'unité d'entraînement (2), de telle façon qu'une liaison électrique est créée avec l'unité d'entraînement (2).

7. Soupape de recyclage des gaz d'échappement selon l'une des revendications précédentes, **caractérisée en ce qu'**une unité de capteur (19) est prévue pour détecter la variation de la levée de soupape, l'unité de capteur (19) étant reliée électriquement au connecteur de raccordement (20).

8. Soupape de recyclage des gaz d'échappement selon la revendication 7, **caractérisée en ce que** l'unité de capteur est constituée d'un anneau magnétique diamétral et d'un capteur de Hall.

9. Soupape de recyclage des gaz d'échappement selon la revendication 8, **caractérisée en ce qu'**une couronne d'engrenage de l'engrenage planétaire ou de l'engrenage stationnaire planétaire est disposée dans l'anneau magnétique.

10. Soupape de recyclage des gaz d'échappement selon l'une des revendications précédentes, **caractérisée en ce qu'**une électronique embarquée est prévue pour commander le système.

11. Soupape de recyclage des gaz d'échappement selon l'une des revendications précédentes, **caractérisée en ce que** l'unité d'entraînement (2) et l'unité de transmission (3) sont disposées dans un carter en tunnel.

12. Soupape de recyclage des gaz d'échappement selon l'une des revendications précédentes, **caractérisée en ce que** la tige de soupape (6) est guidée dans une douille de guidage de soupape (34) qui pénètre d'une part dans la section du canal de soupape (29) et d'autre part dans une chambre de ressort de soupape (35).

13. Soupape de recyclage des gaz d'échappement selon la revendication 12, **caractérisée en ce que**, sur la section qui pénètre dans la chambre de ressort de soupape (35), la tige de soupape (6) supporte l'organe de guidage (11) qui s'applique contre l'élément de ressort (10), qui est par ailleurs en appui sur la paroi de la chambre de ressort de soupape (36).

14. Soupape de recyclage des gaz d'échappement selon la revendication 13, **caractérisée en ce que** la chambre de ressort de soupape (35) est fermée vers l'extérieur par le carter de transmission-entraînement (21).

15. Soupape de recyclage des gaz d'échappement selon la revendication 14, **caractérisée en ce que** la douille de guidage de soupape (34) présente une chambre de souillures (37).

16. Soupape de recyclage des gaz d'échappement selon la revendication 15, **caractérisée en ce que** la tête de soupape présente une section cylindrique formée en aval du siège de soupape.

17. Soupape de recyclage des gaz d'échappement selon l'une des revendications 12 à 16, **caractérisée en ce que** la tête de soupape (7) présente une section conique (38) qui coopère avec une section conique (39) du siège de soupape (33) et forme une section de diffuseur (40) en aval de la ligne de contact.

18. Soupape de recyclage des gaz d'échappement l'une des revendications 12 à 17, **caractérisée en ce qu'**un volet d'étranglement est disposée en amont de la section d'arrivée (27) dans un conduit d'admission d'air (25).

19. Soupape de recyclage des gaz d'échappement l'une des revendications 12 à 18, **caractérisée en ce que** le conduit d'admission d'air (25) est relié au carter de transmission-entraînement (21).
